# EUROPÄISCHE PATENTANMELDUNG

(11) **EP 0 846 887 A2**
(43) Veröffentlichungstag der Anmeldung: **10.06.1998**
(21) Anmeldenummer: 97119422.0
(22) Anmeldetag: 06.11.1997
(51) Int. Cl.: F16F 9/46

(54) **Proportionalventil mit veränderbarer Kennung**

(30) Priorität: 04.12.1996 DE 19650152
(71) Anmelder: Krupp Bilstein GmbH, 58256 Ennepetal (DE)
(72) Erfinder: Huang, Zhen, Dr., 42389 Wuppertal (DE); Hölscher, Reinhard, Dr., 33154 Salzkotten (DE); Mono, Anke, Dipl.-Ing., 51103 Köln (DE); Guse, Michael, Dipl.-Ing., 42105 Wuppertal (DE)

(57) **Zusammenfassung**

Proportionalventil für einen hydraulischen Schwingungsdämpfer mit einem in einem Dämpfungszylinder axial verschieblich geführten und mit einer Kolbenstange verbundenen Kolben, der druckabhängige Dämpfungsventile aufweist und den Dämpfungszylinder in zwei Arbeitsräume unterteilt, und bei dem Durchtrittskanäle vorhanden sind, durch welche das die Dämpfungsventile beaufschlagende Druckmedium strömt, und wobei auf der den Durchtrittskanälen abgewandte Seite des Dämpfungsventils ein mit dem jeweils gegenüberliegenden Arbeitsraum verbundener Druckraum vorhanden ist, über den ein Steuerdruck ausgeübt wird, wobei der Kolben auf einem Steuerzapfen angeordnet ist, welcher einen ersten Ventilsitz für einen in einem ersten Bypass-Kanalsystem angeordneten Steuerschieber und einen in einem zweiten Bypass-Kanalsystem angeordneten zweiten Ventilsitz für einen Steuerstößel aufweist, wobei der Steuerstößel innerhalb des Steuerschiebers verschieblich geführt und gelagert ist und den in dem zweiten Bypass-Kanalsystem vorhandenen Mediumsdurchfluß steuert, wobei das zweite Bypass-Kanalsystem den auf der den Durchtrittskanälen abgewandten Seite des Dämpfungsventils gelegenen Druckraum mit dem jeweils gegenüberliegenden Arbeitsraum verbindet.

## Beschreibung

Die Erfindung betrifft ein Proportionalventil für einen hydraulischen Schwingungsdämpfer mit einem in einem Dämpfungszylinder axial verschieblich geführten und mit einer Kolbenstange verbundenen Kolben, wobei der Kolben druckabhängige Dämpfungsventile für einen Austausch von Dämpfungsflüssigkeit in der Zug- und in der Druckstufe aufweist und den Dämpfungszylinder in zwei Arbeitsräume unterteilt, und bei dem Durchtrittskanäle vorhanden sind, durch welche das die Dämpfungsventile beaufschlagende Druckmedium strömt, und wobei auf der den Durchtrittskanälen abgewandte Seite des Dämpfungsventils ein mit dem jeweils gegenüberliegenden Arbeitsraum verbundener Druckraum vorhanden ist, über den ein Steuerdruck auf das jeweilige Dämpfungsventil ausgeübt wird.

Bekannte Proportionalventile arbeiten mit einer Vorsteuerung in der Art, daß durch den auf die den Durchtrittskanälen abgewandte Seite des Dämpfungsventils wirkenden Druck in einem dort angeordneten Druckraum ein Abheben des Dämpfungsventils durch den Hauptstrom steuerbar wird. Hierzu wird mit Hilfe eines Bypass-Kanalsystems ein Gegendruck in dem Druckraum aufgebaut, welcher - abgesehen von den durch die eventuell in der Dämpfungsventilscheibe oder im zugehörigen Auflagerand vorhandenen Konstantdurchflüssen - erst zu einem vorbestimmten Betriebszustand den auftretenden Hauptstrom freigibt.

Ein solches Proportionalventil, bei dem zusätzlich der Steuerdruck über einen in einem Bypass-Kanalsystem angeordneten Steuerschieber beeinflußt werden kann, zeigt die DE 44 41 047 C2. Das dort offenbarte Proportionalventil erlaubt jedoch trotz der vorhandenen Steuerung lediglich eine in der Tendenz degressive Dämpfungskennlinie, kurz "degressive Kennung" genannt. Ein weiches Abrollen des Fahrzeuges ist damit nachteiligerweise nicht möglich.

Die zum entfernteren Stand der Technik zu zählende DE 33 48 176 C2 offenbart ein Proportionalventil, bei dem die Dämpfungsventilscheiben über einen Stützkörper 38 durch einen in einer Beaufschlagungskammer 40 vorhandenen Steuerdruck beaufschlagbar sind. Dieser Steuerdruck wird über ein Bypass-Kanalsystem aufgebracht, welches mit Hilfe eines zusätzlichen Scheibenventils 45 verschlossen oder geöffnet bzw. in seinem Mediumsdurchfluß gedrosselt werden kann.

Nachteilig sind hierbei die Ausbildung der Druckbeaufschlagungskammer vollständig innerhalb des Kolbenkörpers mit lediglich einer durch ein weiteres Stützelement verschließbaren Seite, sowie eine Reihe von zusätzlichen, im Kolbenkörper verlaufenden Bypassbohrungen und auch eine Ausnehmung bzw. Bohrung innerhalb der Dämpfungsventilscheibe, welche den Ventilherstellung komplizieren, jedoch für einen ungehinderten Durchtritt des zur Steuerung nötigen Volumenanteiles erforderlich werden.

Ein weiterer Nachteil ergibt sich in der Zusammenfassung der Funktionen des Absperrventils und des Steuerventils durch die genannte Ventilscheibe 45. Hierdurch wird das Entstehen von Unstetigkeiten im Volumenstrom, z.B. durch Flattern des Ventils, insbesondere bei hochfrequenten und in der Amplitude niedrigen Schwingungen begünstigt.

Der Erfindung lag also die Aufgabe zugrunde, ein Proportionalventil bereitzustellen, welches nicht nur doppelseitig wirksam und steuerbar ist, sondern welches neben einer proportional verstellbaren degressiven Dämpfungskennlinie auch die Möglichkeit der Einstellung eines "weichen Abrollens" im Bereich niedriger Kolbengeschwindigkeiten mit einer proportional verstellbaren progressiven Dämpfungskennlinie vorsieht und welches durch seine Bauweise eine vereinfachte und wirtschaftliche Herstellung erlaubt.

Gelöst wird diese Aufgabe durch die Merkmale des Hauptanspruchs. Vorteilhafte Weiterbildungen sind in den Unteransprüchen offenbart.

Hierbei ist der Kolben auf einem Steuerzapfen angeordnet ist, welcher einen ersten Ventilsitz für einen in einem ersten Bypass-Kanalsystem angeordneten und den dort vorhandenen Mediumsdurchfluß drosselnden elektromagnetisch betätigbaren Steuerschieber und einen in einem zweiten Bypass-Kanalsystem angeordneten zweiten Ventilsitz für einen Steuerstößel aufweist. Der Steuerstößel ist dabei innerhalb des Steuerschiebers verschieblich geführt und gelagert und steuert den in dem zweiten Bypass-Kanalsystem vorhandenen Mediumsdurchfluß, wobei das zweite Bypass-Kanalsystem den auf der den Durchtrittskanälen abgewandten Seite des Dämpfungsventils gelegenen Druckraum mit dem jeweils gegenüberliegenden Arbeitsraum verbindet.

Ein solcher Ventilaufbau, bei dem zwei Bypass-Kanalsysteme steuerbar bzw. in ihrem Querschnitt bis zum vollständigen Verschluß drosselbar sind, erlaubt auf einfache Weise die Einstellung einer Kennlinie innerhalb eines Kennfeldes, welche zwischen einer 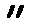 weichen 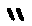 und 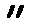 harten 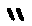 Einstellung gleichzeitig proportional verstellbare progressive und degressive Bereiche aufweist.

Bei der härtesten Kennung bleibt das erste Bypass-Kanalsystem geschlossen und der dort betätigbare Steuerschieber ist vollständig in den Ventilsitz eingefahren. Das zweite Bypass-Kanalsystem erlaubt dann lediglich die druckproportionale Steuerung der Dämpfungsventile in der Zug- und in der Druckstufe, wobei der Steuerstößel für eine Begrenzung des Steuerdrucks und für das Öffnen des zweiten Bypass-Kanalsystems sorgt, wenn der im Arbeitsraum höheren Drucks vorhandene Mediumsdruck die Federvorspannung des Steuerstößels überwindet.

Die Einstellung einer weichen Kennung kann nun beliebig dadurch erfolgen, daß der Steuerschieber im ersten Bypass-Kanalsystem geöffnet wird.

Vorteilhafterweise sind die Steuerschieber und/oder der Steuerstößel gegen eine eine Endstellung fixierende Feder aus einer Ruhestellung verschiebbar. Eine solche Ausführung erlaubt eine einfache Fertigung und Voreinstellung der Steuerung der jeweiligen Bypass-Kanalsysteme.

Vorteilhafterweise sind die den Steuerschieber und die den Steuerstößel gegen eine Endstellung fixierenden Federn in einer Reihenschaltung miteinander verbunden und weisen unterschiedliche Federraten auf. Auch hierdurch wird die Voreinstellbarkeit des gesamten Steuerungssystems erleichtert und es kann eine Anpassung auf den jeweiligen Fahrzeugen entsprechende unterschiedlich harte Grundeinstellungen lediglich durch Einlegen von Federn bestimmter Federkennung bei der Herstellung erreicht werden.

Eine weitere vorteilhafte Ausbildung ergibt sich dadurch, daß der Steuerstößel in der Reihenschaltung zwischen der den Steuerschieber und der den Steuerstößel gegen eine eine Endstellung fixierende Feder angeordnet ist und als Aufnahme und Führung für mindestens eine der Federn ausgebildet ist, und daß die den Steuerschieber gegen eine eine Endstellung fixierende Feder am Steuerstößel abgestützt ist.

Neben einer Vereinfachung der Konstruktion und der Montage kann beim Einstellen einer weichen Kennung kann dann nämlich eine maximale Öffnung dadurch erreicht werden, daß mit dem Betätigen des Steuerschiebers über die vorhandene Reihenschaltung und die Abstützung der Federn auch der Steuerstößel aus dem Ventilsitz gehoben bzw. zumindestens entlastet wird, wodurch beide Bypass-Kanalsysteme durchströmbar sind. Durch entsprechende Anpassungen der einzelnen Federn kann, wie bereits oben erwähnt, hier eine weitere vorteilhafte Voreinstellung erreicht werden.

Eine besonders einfache Ausführung ergibt sich dann, wenn der Steuerstößel aus einem nichtmagnetisierbaren Werkstoff besteht und damit über die Feder voreinstellbar lediglich durch den im Arbeitsraum höheren Drucks vorhandenen Mediumsdruck oder durch den über die Federreihenschaltung angeschlossenen Steuerschieber bewegt werden kann.

Zur Bereitstellung einer einfachen und unabhängigen Beeinflußbarkeit kann der Steuerstößel in einer vorteilhaften Ausbildung von einem im Steuerzapfen angeordneten Elektromagneten betätigt werden, wodurch auch bei der harten Kennung eine vom Mediumsdruck im Arbeitsraum höheren Drucks unabhängige Steuerung des im zweiten Bypass-Kanalsystems vorhandenen Mediumsdurchflusses erfolgen kann.

Anhand eines Ausführungsbeispiels soll die Erfindung näher erläutert werden. Es zeigen
- Fig. 1: das erfindungsgemäße Proportionalventil aufgesetzt auf den zugehörigen Zapfen und verbunden mit der Kolbenstange
- Fig. 2: eine vergrößerte Darstellung des Steuerschiebers und des Steuerstößels innerhalb der Bypass-Kanalsysteme.

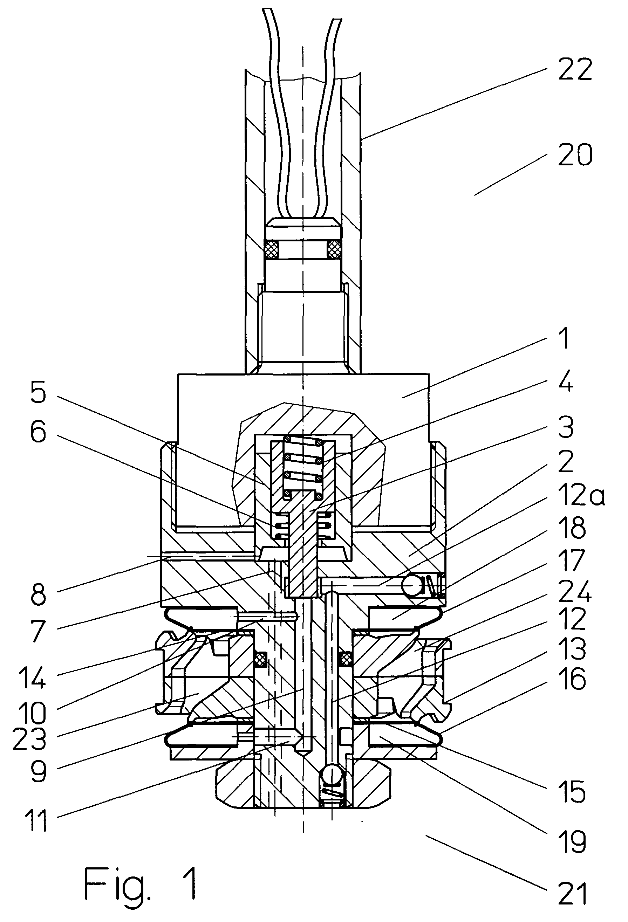

In der Fig. 1 erkennt man den Proportionalmagneten 1, der zentrisch im Steuerzapfen 2 angeordnet ist und einen zentrischen Hohlraum aufweist, in dem der Steuerstößel 3 mit der Stößelfeder 4 und auch der den Steuerstößel umgebende Steuerschieber 5 mit der am Steuerstößel abgestützten Schieberfeder 6 angeordnet sind. Deutlich ist hier zu erkennen, daß der Steuerstößel innerhalb des Steuerschiebers verschieblich geführt und gelagert ist. Das erste Bypass-Kanalsystem besteht im wesentlichen aus den Bypass-Bohrungen 7 und 8, während das zweite Bypass-Kanalsystem die Steuerbohrungen 9, 10 und 11 und die Druckentlastungsbohrungen 12 und 12a beinhaltet. Die Druckentlastungsbohrungen 12 und 12a dienen lediglich dazu, nach Öffnen des Steuerstößels den auf die Dämpfungsventile wirkenden Steuerdruck in der Höhe zu begrenzen.

Der Arbeitskolben 13 beinhaltet weiter die Dämpfungsventile 14 und 15 sowie die zur Ausbildung des Druckraumes und des auf die Dämpfungsventile wirkenden Steuerdrucks notwendigen topfförmigen Stützelemente 16 und 17.

Die Stützelemente 16 und 17 bilden mit den Dämpfungsventilen 14 und 15 die Druckräume 18 und 19, in denen der Steuerdruck aufgebaut werden kann. Der Arbeitskolben 13 teilt den hier nicht näher dargestellten Dämpfungszylinder in die Arbeitsräume 20 und 21 und ist über den Steuerzapfen 2 mit der Kolbenstange 22 verbunden. Der Hauptstrom des Dämpfungsmediums strömt die Dämpfungsventile 14 und 15 über die Durchtrittskanäle 23 und 24 an.

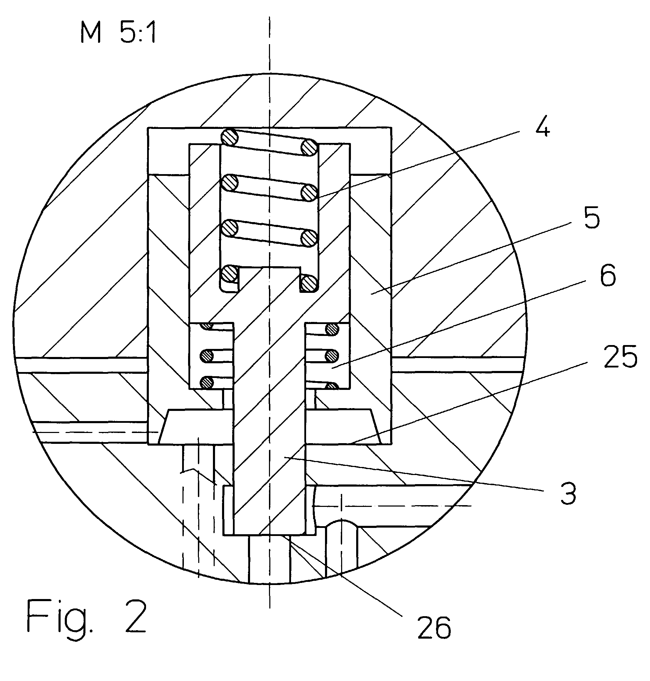

Die Fig. 2 zeigt noch einmal in Vergrößerung den Steuerstößel 3 und den Steuerschieber 5 mit den zugehörigen Federn 4 und 6 sowie die im Steuerzapfen 2 ausgebildeten Ventilsitze 25 und 26.

Bei Einstellung der härtesten Kennung, d.h. bei geschlossenem Steuerschieber 5 und unbestromtem Magneten 1 ist das erste Bypass-Kanalsystem mit seinen Bypass-Bohrungen 7 und 8 geschlossen. Je nach Zug- oder Druckstufe kann nun das Dämpfungsmedium lediglich über die nach innen gebogenen Ränder der topfförmigen Stützelemente 16 und 17 in das zweite Bypass-Kanalsystem eintreten und dort über die Steuerbohrungen 9, 10 und 11 einen Steuerdruck auf die jeweils gegenüberliegenden Dämpfungsventile ausüben.

Übersteigt der Steuerdruck ein bestimmtes, über die Federn voreingestelltes Niveau, so öffnet der Steuerstößel 3 und der im zweiten Bypass-Kanalsystem bestehende Steuerdruck kann über die Druckentlastungsbohrungen 12 und 12a in den Arbeitsraum mit dem jeweils niedrigeren Druck entweichen.

Bei Einstellung einer möglichst weichen Kennung ist der Steuerschieber 5 durch Bestromung des Proportionalmagneten vollständig geöffnet, wodurch auch der Steuerstößel 3 aus dem Ventilsitz 26 gehoben bzw. entlastet wird. Somit steht für das freie Durchströmen das erste Bypass-Kanalsystem mit den Bypass-Bohrungen 7 und 8 zur Verfügung. Zusätzlich besteht die Möglichkeit, daß bei entsprechendem Mediumsdruck in einem Arbeitsraum das Hydraulikmedium über die topfförmigen Stützelemente 16 oder 17 in das zweite Bypass-Kanalsystem eintritt und dort über die Druckentlastungsbohrungen 12 und 12a direkt in den gegenüberliegenden Arbeitsraum fließt.

### Bezugszeichenliste

- 1: Proportionalmagnet
- 2: Steuerzapfen
- 3: Steuerstößel
- 4: Stößelfeder
- 5: Steuerschieber
- 6: Schieberfeder
- 7,8: Bypass-Bohrung im ersten Bypass-Kanalsystem
- 9,10,11: Steuerbohrung im zweiten Bypass-Kanalsystem
- 12,12a: Druckentlastungsbohrung
- 13: Arbeitskolben
- 14,15: Dämpfungsventil
- 16,17: Stützelement
- 18,19: Druckraum
- 20,21: Arbeitsraum
- 22: Kolbenstange
- 23,24: Durchtrittskanal
- 25,26: Ventilsitz

## Patentansprüche

1. Proportionalventil für einen hydraulischen Schwingungsdämpfer mit einem in einem Dämpfungszylinder axial verschieblich geführten und mit einer Kolbenstange verbundenen Kolben, wobei der Kolben druckabhängige Dämpfungsventile für einen Austausch von Dämpfungsflüssigkeit in der Zug- und in der Druckstufe aufweist und den Dämpfungszylinder in zwei Arbeitsräume unterteilt, und bei dem Durchtrittskanäle vorhanden sind, durch welche das die Dämpfungsventile beaufschlagende Druckmedium strömt, und wobei auf der den Durchtrittskanälen abgewandte Seite des Dämpfungsventils ein mit dem jeweils gegenüberliegenden Arbeitsraum verbundener Druckraum vorhanden ist, über den ein Steuerdruck auf das jeweilige Dämpfungsventil ausgeübt wird,
**dadurch gekennzeichnet,**
daß der Kolben (13) auf einem Steuerzapfen (2) angeordnet ist, welcher einen ersten Ventilsitz (25) für einen in einem ersten Bypass-Kanalsystem (7,8) angeordneten und den dort vorhandenen Mediumsdurchfluß drosselnden elektromagnetisch betätigbaren Steuerschieber (5) und einen in einem zweiten Bypass-Kanalsystem (9, 10, 11) angeordneten zweiten Ventilsitz (26) für einen Steuerstößel (3) aufweist, wobei der Steuerstößel innerhalb des Steuerschiebers (5) verschieblich geführt und gelagert ist und den in dem zweiten Bypass-Kanalsystem (9, 10, 11) vorhandenen Mediumsdurchfluß steuert, wobei das zweite Bypass-Kanalsystem den auf der den Durchtrittskanälen (23, 24) abgewandten Seite des Dämpfungsventils (14, 15) gelegenen Druckraum (18, 19) mit dem jeweils gegenüberliegenden Arbeitsraum (20, 21) verbindet.

2. Proportionalventil für einen hydraulischen Schwingungsdämpfer nach Anspruch 1,
**dadurch gekennzeichnet,**
daß der Steuerschieber (5) und/oder der Steuerstößel (3) gegen eine eine Endstellung fixierende Feder (4, 6) aus einer Ruhestellung verschiebbar sind.

3. Proportionalventil für einen hydraulischen Schwingungsdämpfer nach Anspruch 2,
**dadurch gekennzeichnet,**
daß die den Steuerschieber (5) und den Steuerstößel (3) gegen eine eine Endstellung fixierenden Federn (4, 6) unterschiedliche Federraten aufweisen und miteinander in einer Reihenschaltung verbunden sind.

4. Proportionalventil für einen hydraulischen Schwingungsdämpfer nach Anspruch 3,
**dadurch gekennzeichnet,**
daß der Steuerstößel (3) in der Reihenschaltung zwischen den den Steuerschieber (5) und den Steuerstößel (3) gegen eine eine Endstellung fixierenden Federn (4, 6) angeordnet ist und als Aufnahme und Führung für mindestens eine der Federn ausgebildet ist, und daß die den Steuerschieber (5) gegen eine eine Endstellung fixierende Feder (6) am Steuerstößel (3) abgestützt ist.

5. Proportionalventil für einen hydraulischen Schwingungsdämpfer nach Anspruch 3 oder 4,
**dadurch gekennzeichnet,**
daß der Steuerstößel aus einem nicht magnetisierbaren Werkstoff besteht.

6. Proportionalventil für einen hydraulischen Schwingungsdämpfer nach Anspruch 2 bis 4,
**dadurch gekennzeichnet,**
daß der Steuerstößel durch einen im Steuerzapfen angeordneten Elektromagneten betätigbar ist.
